# EUROPEAN PATENT APPLICATION

(11) **EP 4 190 611 A1**
(43) Date of publication of application: **07.06.2023**
(21) Application number: 21848880.7
(22) Date of filing: 16.07.2021
(51) Int. Cl.: B60K 35/00, G02B 5/22, G02B 5/26, F21V 9/04, F21V 9/06, G02B 27/01

(54) **OPTICAL STRUCTURE AND HEAD-UP DISPLAY**

(30) Priority: 31.07.2020 JP 2020130480
(71) Applicant: Mitsui Chemicals, Inc., Tokyo 104-0028 (JP)
(72) Inventor: NISHIMOTO, Taizo, Sodegaura-shi, Chiba 299-0265 (JP); ASADA, Noriaki, Sodegaura-shi, Chiba 299-0265 (JP)
(74) Representative: Epping - Hermann - Fischer
(86) International application number: PCT/JP2021/026758
(87) International publication number: WO 2022/024806

(57) **Abstract**

An optical structure according to an embodiment of the present disclosure comprises: a first film for suppressing ultraviolet rays; and a second film having a transmission spectrum for which the wavelength having the smallest transmission rate is 570-605nm. The first film is disposed at a position which is closer to a light source than the second film is.

## Description

### Technical Field

The present disclosure relates to an optical structure and a head-up display.

### Background Art

Optical films that selectively reduce transmission of incoming light in some wavelength ranges have been widely used. For example, Patent Literature (hereinafter, referred to as PTL) 1 discloses a blue light blocking film that reduces blue rays from the near ultraviolet region.

### Citation List

### Patent Literature

PTL 1
WO 2018/021485

### Summary of Invention

### Technical Problem

A film that selectively reduces some wavelength ranges is generally manufactured by including, in the film, a material that absorbs light in the wavelength ranges. The technique disclosed in PTL 1, for example, uses a cholesteric liquid crystal layer including a low birefringence liquid crystal compound as a selective reflection layer of the film.

For example, in a case where the film is attached to a place exposed to sunlight, for example, to a windowpane of a building or house, ultraviolet rays included in the sunlight may decompose the material included in the film. In this case, the decomposition of the material decreases the function of selectively reducing some wavelength ranges, which the film originally has.

It is an object of the present disclosure to provide an optical structure and a head-up display each capable of preventing deterioration due to ultraviolet rays in a film that selectively reduces some wavelength ranges.

### Solution to Problem

To address the conventional problem, an optical structure of the present disclosure includes: a first layer that reduces ultraviolet rays; and a second layer that has a transmission spectrum in which transmittance is minimized at a wavelength from 570 nm to 605 nm inclusive, wherein, the first layer is placed at a position closer to a light source than the second layer is.

### Advantageous Effects of Invention

According to the present disclosure, it is possible to preventing deterioration due to the ultraviolet rays in a film that selectively reduces some wavelength ranges.

### Brief Description of Drawings

FIG. 1 illustrates an exemplary optical structure according to Embodiment 1;
FIG. 2A illustrates an exemplary arrangement pattern of a light transmitting body, a first film, and a second film in the optical structure according to Embodiment 1;
FIG. 2B illustrates another exemplary arrangement pattern of the light transmitting body, the first film, and the second film in the optical structure according to Embodiment 1;
FIG. 2C illustrates still another exemplary arrangement pattern of the light transmitting body, the first film, and the second film in the optical structure according to Embodiment 1;
FIG. 2D illustrates still another exemplary arrangement pattern of the light transmitting body, the first film, and the second film in the optical structure according to Embodiment 1;
FIG. 2E illustrates still another exemplary arrangement pattern of the light transmitting body, the first film, and the second film in the optical structure according to Embodiment 1;
FIG. 3A illustrates spectral transmittance from infrared to ultraviolet regions of the first film of Application Example 1;
FIG. 3B illustrates spectral transmittance from infrared to ultraviolet regions of the second film of Application Example 1;
FIG. 4 illustrates spectral transmittance from infrared to ultraviolet regions of a third film obtained by layering the first film and the second film;
FIG. 5A illustrates spectral radiance of CIE standard illuminant D65;
FIG. 5B illustrates spectral reflectance of color chart No. 9 for special color rendering of JIS;
FIG. 5C illustrates spectral reflectance of color chart No. 11 for special color rendering of JIS;
FIG. 5D illustrates spectral reflectance of color chart No. 14 for special color rendering of JIS;
FIG. 6 illustrates chromaticity information of reflected light transmitted through each color chart film in Application Example 1;
FIG. 7 is a schematic diagram illustrating a HUD and an optical structure attached to the HUD in Application Example 2;
FIG. 8A is a cross-sectional view illustrating a structure of Example 1 according to Embodiment 2;
FIG. 8B is a cross-sectional view illustrating a structure of Example 2 according to Embodiment 2;
FIG. 8C is a cross-sectional view illustrating a structure of Example 3 according to Embodiment 2;
FIG. 8D is a cross-sectional view illustrating a structure of Comparison 1 according to Embodiment 2;
FIG. 8E is a cross-sectional view illustrating a structure of Reference 2 according to Embodiment 2;
FIG. 9A illustrates chromaticity information of reflected light from color chart No. 9 transmitted through the structures of Reference 1, Reference 2, Comparison 1, and Embodiments before and after the structures are exposed to light from a sunshine carbon arc lamp for 1000 hours;
FIG. 9B illustrates chromaticity information of reflected light from color chart No. 11 transmitted through the structures of Reference 1, Reference 2, Comparison 1, and Embodiments before and after the structures are exposed to light from a sunshine carbon arc lamp for 1000 hours;
FIG. 9C illustrates chromaticity information of reflected light from color chart No. 14 transmitted through the structures of Reference 1, Reference 2, Comparison 1, and Embodiments before and after the structures are exposed to light from a sunshine carbon arc lamp for 1000 hours; and
FIG. 10 illustrates an exemplary configuration of an optical structure according to Embodiment 2.

### Description of Embodiments

Hereinafter, embodiments of the present disclosure will be described in detail with reference to the accompanying drawings. The following embodiments are merely examples, and the present disclosure is not intended to exclude the vitiations and various application of the technique that are not explicitly described in the embodiments.

### [Embodiment 1]

First, Embodiment 1 of the present disclosure will be described.

### <Configuration of Optical Structure 1>

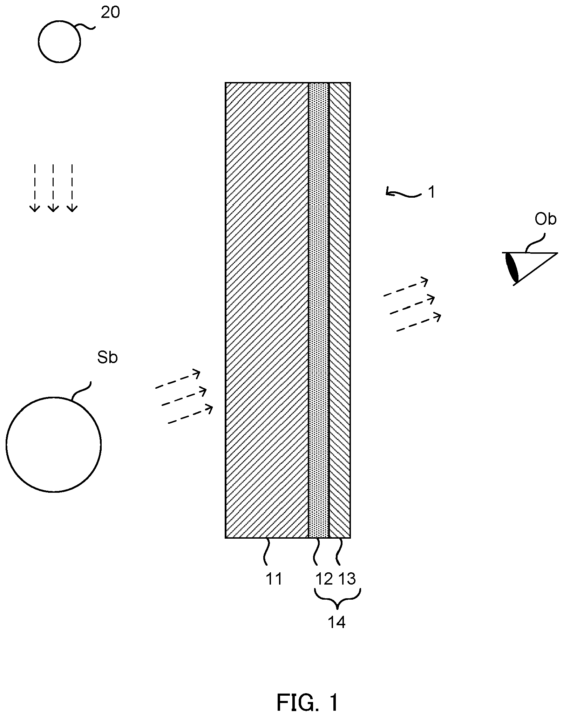

FIG. 1 illustrates an example of optical structure 1 according to Embodiment 1 of the present disclosure. In the example in FIG. 1, optical structure 1 is configured by layering light transmitting body 11, first film 12, and second film 13. First film 12 is an example of a first layer of the present disclosure. Second film 13 is an example of a second layer of the present disclosure. Note that the thickness of each component in FIG. 1 is exaggerated and is different from the actual. In addition, illustration of light source 20, visual subject Sb, and observer Ob in FIG. 1 is conceptual, and the distance between optical structure 1 and visual subject Sb, the distance between optical structure 1 and light source 20, the distance between visual subject Sb and light source 20, the distance between optical structure 1 and observer Ob, or the size of each component is different from the actual.

Light transmitting body 11 is a transparent object. Light transmitting body 11 is glass, for example.

In the example in FIG. 1, first film 12 and second film 13 are layered on top of each other and attached to one surface of light transmitting body 11. In terms of the positional relationship between first film 12 and second film 13, they are arranged so that first film 12 is closer to light source 20 than second film 13.

First film 12 has a characteristic of reducing transmission of heat rays (infrared rays) as well as a characteristic of reducing transmission of ultraviolet rays. In addition, first film 12 is transparent.

First film 12 can have a characteristic of reducing transmission of ultraviolet rays by being formed of, for example, a base material including an ultraviolet absorber. As the ultraviolet absorber, at least one type of ultraviolet absorber selected from among a benzotriazole ultraviolet absorber, a benzophenone ultraviolet absorber, a triadine ultraviolet absorber, a cyclic imino-ether ultraviolet absorber, and a cyanoacrylate ultraviolet absorber is preferred. One type of ultraviolet absorber may be included alone, or two or more types of ultraviolet absorbers may be included.

Examples of the benzotriazole ultraviolet absorber include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-n-octyloxyphenyl)benzotriazole, 2,2'-methylenebis(4-cumyl-6-benzotriazolephenyl), 2,2'-p-phenylenebis(1,3-benzoxazin-4-one), 2-[2-hydroxy-3-(3,4,5,6-tetrahydrophthalimidomethyl)-5-methylphenyl]benzotriazole, and the like.

Examples of the benzophenone ultraviolet absorber include 2,4-dihydroxybenzophenone, 2-hydroxy-4-methoxybenzophenone, 2-hydroxy-4-n-octyloxybenzophenone, 2-hydroxy-4-benzyloxybenzophenone, 2-hydroxy-4-methoxy-5-sulfoxybenzophenone, 2-hydroxy-4-methoxy-5-sulfoxy trihydrideratebenzophenone, 2,2'-dihydroxy-4-methoxybenzophenone, 2,2',4,4'-tetrahydroxybenzophenone, 2,2'-dihydroxy-4,4'dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone, and the like.

Examples of the triazine ultraviolet absorber include 2-(4,6-diphenyl-1,3,5-triazin-2-yl)-5-[(n-hexyl)oxy]-phenol, 2-(4,6-bis(2,4-dimethylphenyl)-1,3,5-triazin-2-yl)-5-[(n-octyl)oxy]-phenol, and the like.

Examples of the cyclic imino-ether ultraviolet absorber include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene-bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), 2,2'-(2-chloro-p-phenylene)bis(3,1-benzoxazin-4-one), and the like.

Examples of the cyanoacrylate ultraviolet absorber include 1,3-bis-[(2'-cyano-3',3'-diphenylacryloyl)oxy]-2,2-bis[(2-cyano-3,3-diphenylacryloyl)oxy]methyl)propane, 1,3-bis-[(2-cyano-3,3-diphenylacryloyl)oxy]benzene, and the like.

The ultraviolet absorber content in first film 12 is preferably 0.01 to 3.0 (both inclusive) parts by mass for 100 parts by mass of resin. First film 12 can sufficiently absorb ultraviolet rays and sufficiently reduce transmission of the ultraviolet rays by containing the ultraviolet absorber of 0.01 parts by mass or more. Thus, by arranging first film 12 closer to light source 20 than a layer (such as second film 13) containing a dye that reduces transmission of light in a specific wavelength range, it is possible to reliably reduce decomposition of the dye in the layer containing the dye that reduces transmission of light in the specific wavelength range. As a result, it is possible to reliably prevent or reduce deterioration of second film 13. Meanwhile, when the ultraviolet absorber content is increased, the ultraviolet absorber is precipitated in the resin. This impairs the transparency of first film 12, thereby disfiguring first film 12. The ultraviolet absorber content of 3.0 parts by mass or less reliably prevents the precipitation of the ultraviolet absorber. Note that the ultraviolet absorber content in first film 12 is more preferably 0.02 to 1.0 (both inclusive) parts by mass, and still more preferably 0.05 to 0.8 (both inclusive) parts by mass.

It is desirable that the ultraviolet absorber itself has high light resistance. From such a viewpoint, the benzotriazole ultraviolet absorber is most preferable as the ultraviolet absorber contained in first film 12. Here, the high light resistance of the ultraviolet absorber itself indicates that the function of absorbing ultraviolet rays is not easily deteriorated.

Note that the benzotriazole ultraviolet absorber is less likely to be decomposed by absorption of ultraviolet rays, so that first film 12 containing the benzotriazole ultraviolet absorber can continuously absorb ultraviolet rays for a long period of time. Thus, by arranging first film 12 closer to light source 20 than a layer (such as second film 13) containing a dye that reduces transmission of light in a specific wavelength range, it is possible to reduce decomposition of the dye in the layer containing the dye that reduces transmission of light in the specific wavelength range for a long period of time. As described above, the benzotriazole ultraviolet absorber is most preferable in terms of resistance to decomposition of the ultraviolet absorber.

Second film 13 has a characteristic of reducing visible light in some wavelength ranges and transmitting that in the other wavelength ranges. In the present disclosure, in the transmission spectrum of second film 13, the wavelength at which the transmittance is minimum compared to other wavelength ranges is from 570 nm to 605 nm (both inclusive). Second film 13 has the above characteristic by including an organic dye having a main absorption peak in a wavelength range of 570 nm to 605 nm (both inclusive), for example. As for the dye contained in second film 13, a known dye may be appropriately adopted. More preferably, in the transmission spectrum of second film 13, the wavelength at which the transmittance is minimum compared to other wavelength ranges is from 585 nm to 600 nm (both inclusive).

Note that, for optical structure 1 in the example illustrated in FIG. 1, light transmitting body 11, first film 12, and second film 13 are arranged in in this order from the side closer to light source 20, but the order of these components is interchangeable as long as first film 12 is closer to the light source than second film 13. Further, at least one of first film 12 and second film 13 may be placed inside light transmitting body 11.

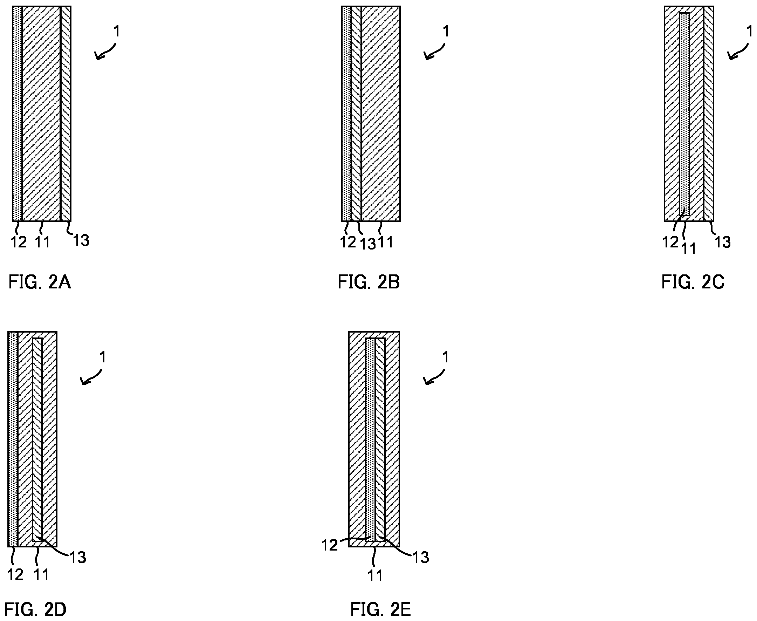

Specific examples will be described. FIGS. 2A to 2E illustrate exemplary arrangement patterns of light transmitting body 11, first film 12, and second film 13 in optical structure 1. In FIGS. 2A to 2E, the light source is assumed to be placed on the left side of each drawing.

In FIG. 2A, the arrangement order is first film 12, light transmitting body 11, and second film 13 from the side closer to the light source. In FIG. 2B, the arrangement order is first film 12, second film 13, and light transmitting body 11 from the side closer to the light source. In FIG. 2C, first film 12 is placed inside light transmitting body 11, and second film 13 is placed on one side of light transmitting body 11 far from the light source. In FIG. 2D, second film 13 is placed inside light transmitting body 11, and first film 12 is placed on one side of light transmitting body 11 close to the light source. In FIG. 2E, first film 12 and second film 13 are arranged in this order inside light transmitting body 11.

### <Application Examples>

In the following, application examples of optical structure 1 according to Embodiment 1 and the effects will be described in detail.

### <Application Example 1>

In this Application Example 1, optical structure 1 is used for a window of a building or a house, for example, and is configured so that first film 12 is on the outdoor side and second film 13 is on the indoor side (see FIG. 1). Sunlight shines on the window for which optical structure 1 is used. That is, light source 20 is the sun in the following description.

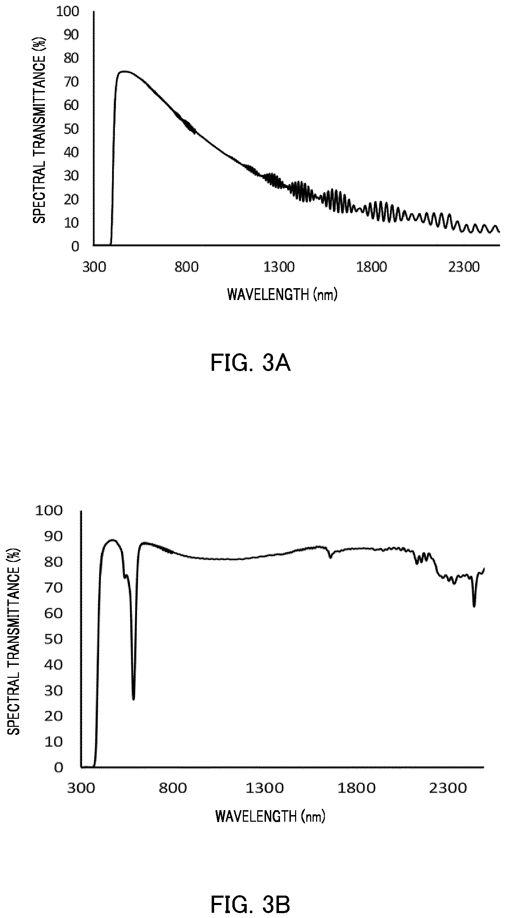

In this Application Example 1, a film having the optical characteristic (spectral transmittance) illustrated in FIG. 3A is adopted as first film 12. A specific example of the film having such spectral transmittance is Refleshine (registered trademark) TW36 manufactured by Sumitomo Riko Co., Ltd. Additionally, in this Application Example 1, a film having the spectral transmittance illustrated in FIG. 3B is adopted as second film 13.

### (Effect 1)

As described above, first film 12 is a thermal barrier film that reduces infrared rays, thereby reducing the room temperature rise due to sunlight. Note that the room temperature is the temperature of a room inside the window serving as optical structure 1.

### (Effect 2)

As described above, first film 12 is placed at a position closer to light source 20 than second film 13 and has the characteristic of reducing ultraviolet rays. In a case of adopting the film having the spectral transmittance illustrated in FIG. 3A as first film 12, first film 12 can reduce ultraviolet rays by 99% or more. Thus, the ultraviolet rays that reach second film 13 are greatly reduced by first film 12 even though the light emitted from light source 20 contains ultraviolet rays.

The characteristic of second film 13 to reduce some wavelength ranges is provided by the dye contained in the second film, as described above. Such a dye is decomposed by ultraviolet rays in some cases. In optical structure 1 according to an embodiment of the present disclosure, however, first film 12 greatly reduces the ultraviolet rays reaching second film 13 as described above. This effectively prevents or reduces deterioration of the characteristic of second film 13 due to ultraviolet rays.

### (Effect 3)

In general, a thermal barrier film having a characteristic of reducing infrared rays also reduces visible light to some extent. In a case of adopting the film having the spectral transmittance illustrated in FIG. 3A as first film 12, the transmittance of visible light is about 70%. Thus, when a person indoors looks at an outside scene through a windowpane, etc. to which only first film 12 is attached, for example, color appearance is possibly deteriorated, such as the scene looking dimmer or faded.

Here, as described above, second film 13 includes an organic dye having the main absorption peak in the wavelength range of 570 nm to 605 nm (both inclusive), for example. That is, second film 13 has a characteristic of absorbing mainly yellow visible light. The inventors of the present disclosure have found by layering such second film 13 over first film 12 that viewing the scene through first film 12 and second film 13 improves the color appearance compared to viewing the scene through first film 12 alone. The reason for this will be described below. Note that, in the following description, a film obtained by layering first film 12 and second film 13 is referred to as third film 14.

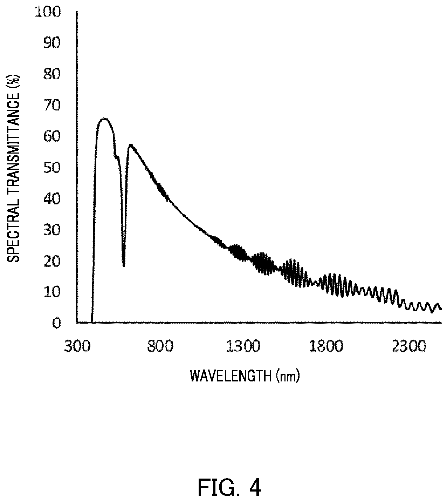

FIG. 4 illustrates spectral transmittance from infrared to ultraviolet regions of third film 14 obtained by layering first film 12 and second film 13. The spectral transmittance of third film 14 illustrated in FIG. 4 was obtained by actual measurement using a film obtained by actually layering a film having the spectral transmittance illustrated in FIG. 3A and a film having the spectral transmittance illustrated in FIG. 3B.

The inventors performed a color appearance simulation by viewing different colors through first film 12 alone or third film 14 based on the spectral transmittance of first film 12 and third film 14.

This simulation is performed on the assumption that the light emitted from the light source is reflected by a visual subject and the reflected light is transmitted through the film and enters observer's eyes (see FIG. 1). A Commission Internationale de l'Eclairage (CIE) standard illuminant D65 was used as the light source. In addition, color charts (test colors) for special color rendering defined by Japanese Industrial Standards (JIS) were used as the visual subject.

The simulation procedure is as follows. First, spectral radiance information indicating the spectral radiance of CIE standard illuminant D65 was obtained. In addition, spectral reflectance information indicating the spectral reflectance for each of the color charts for special color rendering of JIS was obtained. Next, the spectral radiance of the light reflected from each color chart transmitting through each film was calculated by multiplying the spectral radiance information of the light source, the spectral reflectance information for each color chart, and the spectral transmittance of first film 12 illustrated in FIG. 3A or the spectral transmittance of third film 14 illustrated in FIG. 4. Chromaticity information of the reflected light from each color chart in a predetermined color space (for example, L*a*b* color space) was calculated based on the spectral radiance of the light transmitted through each film. Then, color differences between the color charts when viewed through the films were calculated based on the chromaticity information.

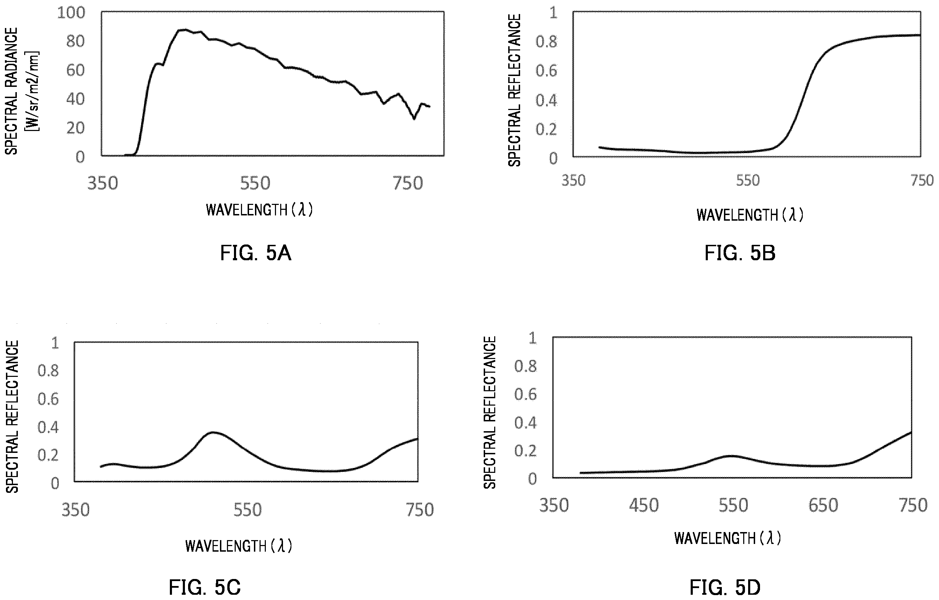

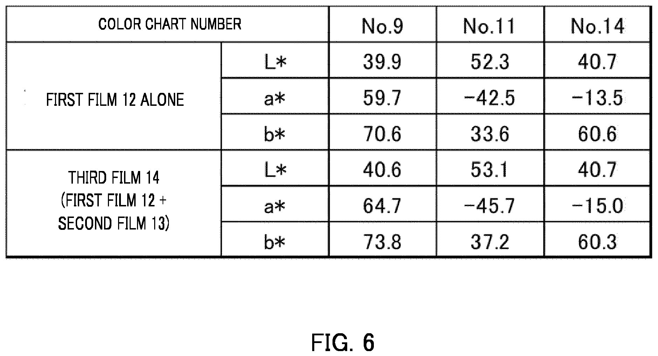

FIG. 5A illustrates the spectral radiance of CIE standard illuminant D65. FIGS. 5B to 5D illustrate the spectral reflectance for each of the color charts for the special color rendering. Note that FIGS. 5B to 5D illustrate the spectral reflectance of only No. 9 (red), No. 11 (green), and No. 14 (dark green) among 15 color charts. FIG. 6 illustrates chromaticity information of the reflected light transmitted through each of the films of color charts No. 9, No. 11, and No. 14.

In FIG. 6, each of the "L*" column, the "a*" column, and the "b*" column indicates colors obtained by viewing the light reflected by the color charts through first film 12 alone or third film 14 as coordinates in the L*a*b* color space. In other words, each of the "L*" column, the "a*" column, and the "b*" column indicates the coordinates in the L*a*b* color space of colors of the light reflected by respective color charts transmitted through first film 12 alone or third film 14.

Based on FIG. 6, the color difference between color chart No. 9 (red) and color chart No. 11 (green) in the light transmitted through third film 14 is calculated to be 116.3. Meanwhile, based on FIG. 6, the color difference between color chart No. 9 (red) and color chart No. 11 (green) in the light transmitted through first film 12 alone is calculated to be 108.7. Note that the above color differences are each calculated as a two-dimensional distance between the two coordinates in the a*b* plane, but the color difference may be calculated as a three-dimensional distance between two coordinates in the L*a*b* color space.

As described above, the color difference (116.3) between color chart No. 9 (red) and color chart No. 11 (green) in the light transmitted through third film 14 is greater than the color difference (108.7) in the light transmitted through first film 12 alone.

Likewise, based on FIG. 6, the color difference between color chart No. 9 (red) and color chart No. 14 (dark green) in the light transmitted through third film 14 is calculated to be 80.8. Meanwhile, the color difference between color chart No. 9 (red) and color chart No. 14 (dark green) in the light transmitted through first film 12 alone is calculated to be 73.9.

As described above, the color difference (80.8) between color chart No. 9 (red) and color chart No. 14 (dark green) in the light transmitted through third film 14 is greater than the color difference (73.9) in the light transmitted through first film 12 alone.

As described above, it is found that the color difference between the red light and the green light transmitted through both first film 12 and second film 13 is greater than the color difference between the red light and the green light transmitted through first film 12 alone.

Since the color difference is a measure of difference in colors, the greater the color difference between two colors is, the easier it is for a viewer to distinguish between these two colors in general. Thus, when there is a great color difference between an area of viewer's attention and the peripheral area in the field of vision, the viewer can clearly see the area of attention as compared with the case of a small color difference. That is, an observer viewing a scene through both first film 12 and second film 13 can clearly see the red region or the green region in the scene as compared to viewing the same scene through first film 12 alone.

As a result, the color appearance is improved when a scene including at least red and green is viewed through optical structure 1 in which first film 12 and second film 13 are layered as compared to first film 12 alone. Note that the subject to be viewed through optical structure 1 is a scene in the above description but it is not limited to a scene, and the same effects can be obtained when various visual subjects are viewed through optical structure 1.

### <Application Example 2>

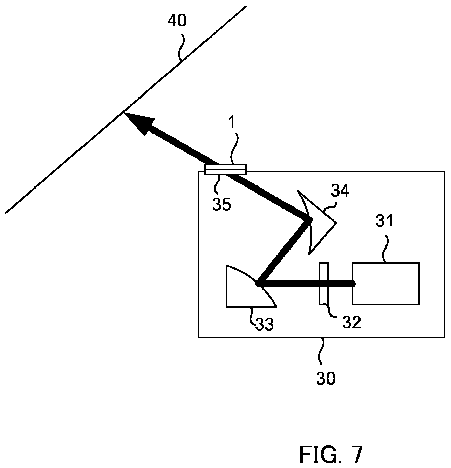

In this Application Example 2, optical structure 1 according to Embodiment 1 of the present disclosure is applied to a head-up display (HUD). FIG. 7 is a schematic diagram illustrating HUD 30 and optical structure 1 attached to HUD 30. Although a HUD is used for various purposes, FIG. 7 illustrates HUD 30 projecting an image on windshield 40 of a car, by way of example.

As illustrated in FIG. 7, HUD 30 includes projector 31, intermediate screen 32, convex mirror 33, and concave mirror 34. Projector 31 projects image display light to be projected onto windshield 40. Intermediate screen 32 diffuses the display light projected by projector 31 and orients the light to a desired angle. For example, a microlens array or the like is used for intermediate screen 32. Convex mirror 33 and concave mirror 34 project the display light diffused by intermediate screen 32 to a desired position on windshield 40. Emission opening 35 is an emission opening of the HUD apparatus and is provided between concave mirror 34 and windshield 40.

Such HUD 30 has the following issues. In a case where a microlens array is used as intermediate screen 32 of HUD 30, it is known that the image quality deteriorates due to a change in temperature of the microlens array. When sunlight shines on windshield 40, the sunlight may travel backward through the light path of the projection and reach intermediate screen 32. This raises the temperature of the lenses composing intermediate screen 32. In such a case, the microlens array of intermediate screen 32 is distorted due to the rise in temperature, and the projected image deteriorates.

To prevent the rise in temperature by the sunlight traveling backward through the light path of the projection, a thermal barrier film may be applied to windshield 40, for example. A thermal barrier film, however, reduces the transmission of visible light, thereby reducing the driver's visibility and causing a safety issue.

It is also conceivable to apply a thermal barrier film to emission opening 35 of HUD 30. This case does not reduce the driver's visibility but reduces the saturation of an image projected on windshield 40, thereby making it difficult for the driver to see information provided by HUD 30.

It is also conceivable to increase the brightness of display light outputted by projector 31 of HUD 30, but this increases the power consumption of HUD 30, which is not preferable.

With this regard, placing optical structure 1 at emission opening 35 as illustrated in FIG. 7, for example, makes it possible to prevent the temperature inside HUD 30 from rising due to sunlight (see Effect 1 of Application Example 1), and it is also possible to prevent the deterioration of the visibility and the color appearance of an image projected on windshield 40 (see Effect 3 of Application Example 1). Note that optical structure 1 is placed so that first film 12 (see FIG. 1) is closer to windshield 40 and second film 13 is closer to emission opening 35.

Although optical structure 1 is placed at emission opening 35 in the example illustrated in FIG. 7, optical structure 1 may be placed at any position on the light path of HUD 30 between intermediate screen 32 and emission opening 35. Note that optical structure 1 is preferably placed at emission opening 35 in terms of preventing the temperature of the HUD apparatus from rising due to sunlight.

As a variation, optical structure 1 according to this Application Example 2 need not include light transmitting body 11. Optical structure 1 of this variation may be configured or placed so that first film 12 is closer to the light source (sun) than second film 13, for example, and first film 12 and second film 13 may be layered or separated from each other. In addition, optical structure 1 of this variation may be placed at any position on the light path of HUD 30.

As described above, HUD 30 according to Application Example 2 prevents sunlight from traveling backward through the light path of the projection without increasing power consumption, thereby preventing distortion of a microlens array due to the temperature rise and also preventing deterioration of a projected image.

### <Weather Resistance Testing>

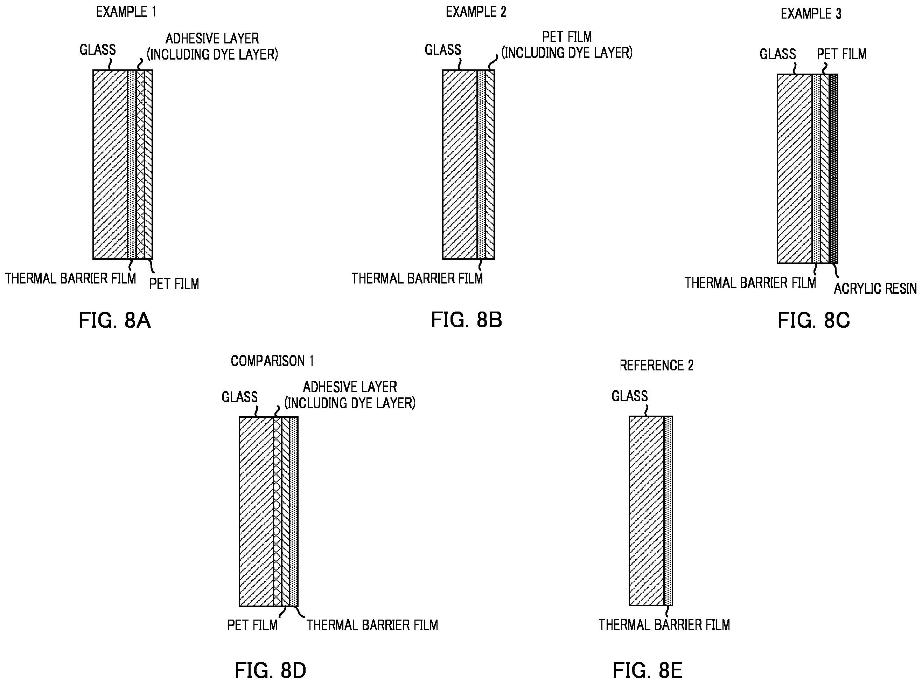

Next, testing results on weather resistance of the optical structure according to Embodiment 1 of the present disclosure will be described by comparing Examples 1 to 3 and Comparison 1. FIGS. 8A to 8C are cross-sectional views illustrating structures of Examples 1 to 3. FIG. 8D is a cross-sectional view illustrating a structure of Comparison 1.

In Examples 1 to 3, the optical structure is formed by layering the light transmitting body, the first film, and the second film in this order, as is the case with optical structure 1 illustrated in FIG. 1. In Examples 1 to 3, a float glass plate ("JIS R 3202" (thickness 3 mm, width 30 mm, length 50 mm) manufactured by Test Piece Co., Ltd.) was adopted as the light transmitting body. In Examples 1 to 3, "Nano80s" (size of 20 mm × 60 mm) manufactured by 3M Company was adopted as the first film, i.e., a film that reduces infrared rays and ultraviolet rays (thermal barrier film).

In Examples 1 to 3, the following different films are adopted as the second film, i.e., a film having a characteristic of reducing visible light in some wavelength ranges and transmitting that in the other wavelength ranges.

In Example 1, a polyethylene terephthalate (PET) film in which an adhesive layer with the thickness of 12 µm is formed on the surface on the first film side was adopted. The adhesive layer contains a dye layer with the concentration of 0.24 wt% and the size of 20 mm × 60 mm.

In Example 2, a PET film containing a dye layer with the concentration of 0.24 wt% and the size of 20 mm × 60 mm was adopted.

In Example 3, a PET film in which an acrylic resin layer with the thickness of 12 µm is formed on the surface on the opposite side of the first film was adopted. The acrylic resin layer contains a dye layer with the concentration of 0.24 wt% and the size of 20 mm × 60 mm. For the acrylic resin, "ALMATEX L1057M" manufactured by Mitsui Chemicals, Inc. was adopted.

Note that the upper and lower portions of the laminate of the light transmitting body, the first film, and the second film were fixed with a polyimide tape or the like in Examples 2 and 3 since there is no adhesive layer between the first film and the second film.

In addition, a structure was formed as Comparison 1 in which a PET film formed with the same adhesive layer as in the above Example 1 was attached to the float glass plate and a thermal barrier film was further layered.

Further, a structure of the float glass plate alone was used as Reference 1. Furthermore, a structure was formed as Reference 2 in which only a thermal barrier film was layered on the above float glass plate. FIG. 8E is a cross-sectional view illustrating the structure of Reference 2.

Weather resistance testing using a JIS B 7753 sunshine carbon arc lamp light resistance tester and a weather resistance tester was performed by placing these structures with the glass side closer to the light source. Note that the JIS B 7753 sunshine carbon arc lamp emits light equivalent to the amount of ultraviolet rays for one year of outdoor exposure in approximately 1189 hours.

Specific methods of the weather resistance testing and the evaluation are as follows. Under the same conditions as those of weather resistance testing for "JIS-A5759: 2016 adhesive films for glazing", light from the sunshine carbon arc lamp was directed against the glass-side surface of the above structures for 1000 hours. Then, the spectral transmittance was measured by using each of the structures before and after the testing. In addition, the measured spectral transmittance was used to calculate the color difference between color chart No. 9 (red) and color chart No. 11 (green) and the color difference between color chart No. 9 (red) and color chart No. 14 (dark green) for special color rendering of JIS in the light of CIE standard illuminant D65 transmitted through the respective structures before and after the testing. Finally, a rate of difference (hereinafter, referred to as a retention rate) between the color difference after the testing and a reference value, which is the color difference in Reference 2 (only a thermal barrier film is attached to the glass), was calculated as the testing result considering the difference between the color difference before the testing in each of the Examples and the Comparison and the reference value to be 100%.

In other words, the testing result (retention rate) indicates how well the color appearance viewed through the structure of each of the Examples and the Comparison is retained after the testing.

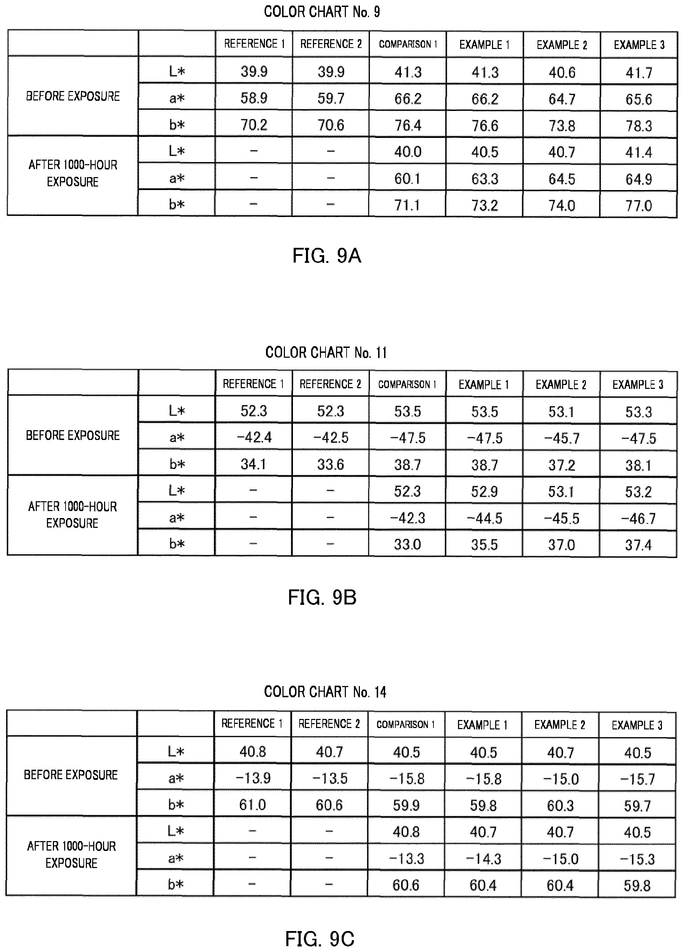

The testing results will be described below. FIG. 9A illustrates chromaticity information of reflected light from color chart No. 9 transmitted through the structures of Reference 1, Reference 2, Comparison 1, and the Embodiments before and after the structures are exposed to light from the sunshine carbon arc lamp for 1000 hours. FIG. 9B illustrates chromaticity information of reflected light from color chart No. 11 transmitted through the structures of Reference 1, Reference 2, Comparison 1, and the Embodiments before and after the structures are exposed to light from the sunshine carbon arc lamp for 1000 hours. FIG. 9C illustrates chromaticity information of reflected light from color chart No. 14 transmitted through the structures of Reference 1, Reference 2, Comparison 1, and the Embodiments before and after the structures are exposed to light from the sunshine carbon arc lamp for 1000 hours. Table 1 below illustrates the retention rates in Comparison 1 and the Embodiments. Note that each of the chromaticity information indicated in FIGS. 9A to 9C is a value calculated numerically using the spectral transmittance of each structure measured as described above and then rounded to two decimal places.

**[Table 1]**

| | Comparison 1 | Example 1 | Example 2 | Example 3 |
|---|---|---|---|---|
| Retention rate for color difference between No. 9 and No. 11 | 5.4 | 49.1 | 97.4 | 85.8 |
| Retention rate for color difference between No. 9 and No. 14 | 2 | 48 | 98.6 | 85.6 |

The measurement results will be described in detail below. The color difference between color chart No. 9 and color chart No. 11 in the light of CIE standard illuminant D65 transmitted through the structure of Reference 2 was 108.7.

The color difference between color chart No. 9 and color chart No. 11 in the light of CIE standard illuminant D65 transmitted through the structure of Comparison 1 before the above weather resistance testing was 119.8. Meanwhile, the color difference between color chart No. 9 and color chart No. 11 in the light of CIE standard illuminant D65 transmitted through the structure of Comparison 1 after the above weather resistance testing was 109.3. The retention rate in Comparison 1 calculated using these values is 5.4%.

The color difference between color chart No. 9 and color chart No. 11 in the light of CIE standard illuminant D65 transmitted through the optical structure of Example 1 before the above weather resistance testing was 119.9. Meanwhile, the color difference between color chart No. 9 and color chart No. 11 in the light of CIE standard illuminant D65 transmitted through the optical structure of Example 1 after the above weather resistance testing was 114.2. The retention rate in Example 1 calculated using these values is 49.1%.

The color difference between color chart No. 9 and color chart No. 11 in the light of CIE standard illuminant D65 transmitted through the optical structure of Example 2 before the above weather resistance testing was 116.3. Meanwhile, the color difference between color chart No. 9 and color chart No. 11 in the light of CIE standard illuminant D65 transmitted through the optical structure of Example 2 after the above weather resistance testing was 116.1. The retention rate in Example 2 calculated using these values is 97.4%.

The color difference between color chart No. 9 and color chart No. 11 in the light of CIE standard illuminant D65 transmitted through the optical structure of Example 3 before the above weather resistance testing was 120.0. Meanwhile, the color difference between color chart No. 9 and color chart No. 11 in the light of CIE standard illuminant D65 transmitted through the optical structure of Example 3 after the above weather resistance testing was 118.4. The retention rate in Example 3 calculated using these values is 85.8%.

The color difference between color chart No. 9 and color chart No. 14 in the light of CIE standard illuminant D65 transmitted through the structure of Reference 2 was 73.9.

The color difference between color chart No. 9 and color chart No. 14 in the light of CIE standard illuminant D65 transmitted through the structure of Comparison 1 before the above weather resistance testing was 83.6. Meanwhile, the color difference between color chart No. 9 and color chart No. 14 in the light of CIE standard illuminant D65 transmitted through the structure of Comparison 1 after the above weather resistance testing was 74.1. The retention rate in Comparison 1 calculated using these values is 2.0%.

The color difference between color chart No. 9 and color chart No. 14 in the light of CIE standard illuminant D65 transmitted through the optical structure of Example 1 before the above weather resistance testing was 83.7. Meanwhile, the color difference between color chart No. 9 and color chart No. 14 in the light of CIE standard illuminant D65 transmitted through the optical structure of Example 1 after the weather resistance testing was 78.6. The retention rate in Example 1 calculated using these values is 48.0%.

The color difference between color chart No. 9 and color chart No. 14 in the light of CIE standard illuminant D65 transmitted through the optical structure of Example 2 before the above weather resistance testing was 80.8. Meanwhile, the color difference in the light of CIE standard illuminant D65 transmitted through the optical structure of Example 2 after the weather resistance testing was 80.7. The retention rate in Example 2 calculated using these values is 98.6%.

The color difference between color chart No. 9 and color chart No. 14 in the light of CIE standard illuminant D65 transmitted through the optical structure of Example 3 before the above weather resistance testing was 83.4. Meanwhile, the color difference between color chart No. 9 and color chart No. 14 in the light of CIE standard illuminant D65 transmitted through the optical structure of Example 3 after the weather resistance testing was 82.0. The retention rate in Example 3 calculated using these values is 85.6%.

As described above, in any of the optical structures of Examples 1 to 3, deterioration in the color appearance due to prolonged exposure to ultraviolet rays was less than that in the structure of Comparison 1. In addition, when an adhesive layer is placed between the light transmitting body and the first film or the second film as in the optical structure of Example 1, the retention rate is lower than that in Examples 2 and 3. This indicates that the optical structure without an adhesive layer is more preferable.

Referring to FIGS. 9A to 9C, in terms of the performance before the weather resistance testing, it is found that, in any of Examples 1 to 3, the color difference between color chart No. 9 and color chart No. 11 or the color difference between color chart No. 9 and color chart No. 14 is greater than the color difference in Reference 1, which uses the structure of the glass plate alone, or in Reference 2, which uses the structure of the glass plate with only a thermal barrier film layered.

To be more specific, the color difference between color chart No. 9 and color chart No. 11 is 119.9 in Example 1, 116.3 in Example 2, and 120.0 in Example 3. The values in the Examples are all greater than 107.5 in Reference 1 or 108.7 in Reference 2.

Likewise, the color difference between color chart No. 9 and color chart No. 14 is 83.7 in Example 1, 80.9 in Example 2, and 83.4 in Example 3. The values in the Examples are all greater than 73.4 in Reference 1 or 73.9 in Reference 2.

Therefore, when a subject is viewed through the optical structure formed by layering a light transmitting body (glass), the first film (thermal barrier film), and the second film (film reducing some wavelength ranges) in this order as in Examples 1 to 3, the color difference between specific colors is greater (i.e., the appearance of specific colors is improved) than when viewed through glass alone or a structure of glass with only a thermal barrier film layered.

### [Embodiment 2]

In Embodiment 1 described above, a description has been given of optical structure 1 formed by sticking first film 12 reducing infrared rays and ultraviolet rays and second film 13 reducing light in a specific wavelength range together on light transmitting body 11 such as glass so that the first film is closer to a light source. In the present Embodiment 2, a description will be given of optical structure 100 that is composed of a single film having a multi-layer structure without a light transmitting body and produces the same effects as optical structure 1 in Embodiment 1.

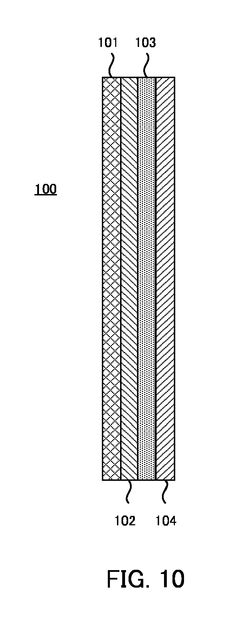

FIG. 10 illustrates an exemplary configuration of optical structure 100 according to Embodiment 2. As illustrated in FIG. 10, optical structure 100 includes adhesive layer 101, transparent substrate 102, sputtered metal layer 103, and hard coating layer 104. Adhesive layer 101 is a layer (sealing material etc.) for attaching optical structure 100 to a light transmitting body (glass etc.). Transparent substrate 102 is a PET layer, for example. Sputtered metal layer 103 is a metal-containing layer formed by sputtering or the like, and is a layer having a thermal barrier function by reducing infrared rays. Hard coating layer 104 is a layer for preventing optical structure 100 from being damaged. Note that the adhesive layer 101 side is closer to a light source when optical structure 100 is attached to glass or the like and actually used.

In optical structure 100 illustrated in FIG. 10, a function of reducing ultraviolet rays is included in at least one of the plurality of layers other than the sputtered metal layer having a function of reducing infrared rays. Additionally, in optical structure 100 illustrated in FIG. 10, a function of reducing light in a specific wavelength range is included in at least one of the plurality of layers other than the sputtered metal layer having a function of reducing infrared rays.

As is the case with first film 12 in Embodiment 1, the function of reducing transmission of ultraviolet rays can be obtained by including an ultraviolet absorber in a predetermined layer that is desired to have the function of reducing transmission of ultraviolet rays.

For example, the following configuration is the first configuration example of optical structure 100 according to Embodiment 2. That is, adhesive layer 101 has the function of reducing ultraviolet rays, and transparent substrate 102 has the function of reducing light in a specific wavelength range. In addition, a method of manufacturing transparent substrate 102 having the function of reducing light in a specific wavelength range includes, for example, a method of adding a dye that reduces light in a specific wavelength range to conventional transparent substrate 102.

Meanwhile, the second configuration example includes a configuration in which at least one of adhesive layer 101 and transparent substrate 102 has the function of reducing ultraviolet rays, and hard coating layer 104 has the function of reducing light in a specific wavelength range. The same manufacturing method as in the first configuration example can be adopted for a method of manufacturing adhesive layer 101 or transparent substrate 102 having the function of reducing ultraviolet rays, and for hard coating layer 104 having the function of reducing light in a specific wavelength range.

As described above, according to optical structure 100 with a multi-layer film structure in which a layer having a function of reducing ultraviolet rays, a layer having a function of reducing infrared rays, and a layer having a function of reducing light in a specific wavelength range are layered on top of each other, placing the layer having a function of reducing ultraviolet rays closer to a light source makes it possible to improve the appearance of a specific color by reducing light in a specific wavelength range and to prevent the layer having a function of reducing light in a specific wavelength range from being deteriorated by ultraviolet rays, as is the case with optical structure 1 in Embodiment 1.

Note that, although the example in FIG. 10 describes optical structure 100 in which four types of layers, which are adhesive layer 101, transparent substrate 102, sputtered metal layer 103, and hard coating layer 104, are layered, more layers having other functions may be layered. In a case where optical structure 100 is composed of a laminate of more layers, any layer other than the sputtered metal layer may appropriately have the function of reducing ultraviolet rays and the function of reducing light in a specific wavelength range.

### <Effects>

As described above, optical structure 1 according to Embodiment 1 of the present disclosure includes first film 12 that reduces ultraviolet rays, second film 13 that has the transmission spectrum in which the transmittance is minimized at the wavelength from 586 nm to 600 nm inclusive, and light transmitting body 11, and first film 12 is placed at a position closer to light source 20 than second film 13.

With such a configuration, the first film greatly reduces ultraviolet rays reaching second film 13 even when light source 20 emits light containing ultraviolet rays. This prevents or reduces deterioration of second film 13 due to ultraviolet rays.

In optical structure 1 according to the embodiment of the present disclosure, first film 12 is a thermal barrier film that reduces infrared rays. This prevents temperature rise in the space where the light transmitted through optical structure 1 reaches.

In optical structure 1 according to the embodiment of the present disclosure, the color difference between red light and green light transmitted through first film 12 and second film 13 in a predetermined color plane or color space is greater than the color difference between red light and green light transmitted through first film 12 but not transmitted through second film 13 in the color plane or color space.

Thus, the color appearance is improved when a visual subject including at least red and green is viewed through optical structure 1 as compared to first film 12 alone.

Meanwhile, optical structure 100 according to Embodiment 2 of the present disclosure includes no light transmitting body and is composed of a single film with a multi-layer structure. This multi-layer structure is configured by layering a layer having a function of reducing ultraviolet rays, a layer having a function of reducing infrared rays, and a layer having a function of reducing light in a specific wavelength range on top of each other. Placing the layer having a function of reducing ultraviolet rays closer to a light source makes it possible to improve the appearance of a specific color by reducing light in a specific wavelength range and to prevent the layer having a function of reducing light in a specific wavelength range from being deteriorated by ultraviolet rays, as is the case with optical structure 1 in Embodiment 1.

### <Variations>

In the embodiment described above, optical structure 1 is formed by layering first film 12 and second film 13 on either side of light transmitting body 11 so that first film 12 is closer to light source 20 than second film 13, but these components need not be layered and may be placed apart from each other, for example.

Although glass is exemplified as light transmitting body 11, light transmitting body 11 may include transparent solids such as plastics, transparent gases such as air, or transparent liquids such as water.

In Embodiment 1 described above, first film 12 may include only a characteristic of reducing transmission of ultraviolet rays without including a characteristic of reducing transmission of infrared rays. Further, optical structure 100 according to Embodiment 2 need not include a layer having a function of reducing transmission of infrared rays as long as it includes a layer having a function of reducing transmission of ultraviolet rays.

The present application claims a priority based on Japanese Patent Application No. 2020-130480, filed on July 31, 2020, and the claims, specification, drawings, and abstract of the application are incorporated herein by reference in its entirety.

### Industrial Applicability

The present disclosure is suitable for an optical structure used for a windowpane and the like.

### Reference Signs List

1 Optical structure
11 Light transmitting body
12 First film
13 Second film
14 Third film
20 Light source
30 HUD
31 Projector
32 Intermediate screen
33 Convex mirror
34 Concave mirror
35 Emission opening
40 Windshield
100 Optical structure
101 Adhesive layer
102 Transparent substrate
103 Sputtered metal layer
104 Hard coating layer

## Claims

1. An optical structure, comprising:
a first layer that reduces ultraviolet rays; and
a second layer that has a transmission spectrum in which transmittance is minimized at a wavelength from 570 nm to 605 nm inclusive, wherein,
the first layer is placed at a position closer to a light source than the second layer is.

2. The optical structure according to Claim 1, wherein the first layer is a thermal barrier film that reduces infrared rays.

3. The optical structure according to Claim 1 or 2, wherein a color difference, in a predetermined color plane or a predetermined color space, between red light and green light that are from the light source and have transmitted through the first layer and the second layer is greater than a color difference, in the color plane or the color space, between red light and green light that are from the light source and have not transmitted through the first layer or the second layer.

4. The optical structure according to any one of Claims 1 to 3, wherein a color difference, in a predetermined color plane or a predetermined color space, between red light and green light that are from the light source and have transmitted through the first layer and the second layer is greater than a color difference, in the color plane or the color space, between red light and green light that are from the light source and have transmitted through the first layer but not through the second layer.

5. The optical structure according to any one of Claims 1 to 4, further comprising a light transmitting body.

6. The optical structure according to Claim 5, wherein the first layer, the light transmitting body, and the second layer are arranged in this order from the light source.

7. The optical structure according to Claim 5 or 6, wherein the light transmitting body is a windowpane.

8. The optical structure according to any one of Claims 5 to 7, wherein the first layer is an adhesive layer for sticking the light transmitting body and at least one of layers including the second layer.

9. The optical structure according to Claim 8, wherein the second layer is a transparent substrate layer for holding the first layer.

10. The optical structure according to any one of Claims 1 to 9, wherein the first layer contains a benzotriazole ultraviolet absorber.

11. A head-up display, comprising:
the optical structure according to any one of Claims 1 to 10;
an emission opening; and
an intermediate screen.

12. The head-up display according to Claim 11, wherein the head-up display is mounted on a vehicle.

13. The head-up display according to Claim 11 or 12, wherein the intermediate screen is composed of a microlens array.

14. The head-up display according to any one of Claims 11 to 13, wherein the optical structure is placed at the emission opening.

15. The head-up display according to any one of Claims 11 to 14, wherein the optical structure is placed between the emission opening and the intermediate screen.
